# EUROPEAN PATENT SPECIFICATION

(11) **EP 2 258 592 B1**
(45) Date of publication and mention of the grant of the patent: **14.03.2012**
(21) Application number: 10005754.6
(22) Date of filing: 28.12.2004
(51) Int. Cl.: B60S 1/38

(54) **Wiper blade**
Wischerblatt
Essuie-glace

(30) Priority: 30.01.2004 JP 2004024787; 18.03.2004 JP 2004078948; 23.03.2004 JP 2004085417; 27.05.2004 JP 2004158106; 19.08.2004 JP 2004239848
(43) Date of publication of application: 08.12.2010
(62) Divisional of application: 04030904.9
(73) Proprietor: ASMO CO., LTD., Kosai-city, Shizuoka-pref., 431-0493 (JP)
(72) Inventor: Nakano, Hiroyuki, Kosai-city Shizuoka-pref., 431-0493 (JP); Torii, Naoki, Kosai-city Shizuoka-pref., 431-0493 (JP); Saito, Toshihiro, Kosai-city Shizuoka-pref., 431-0493 (JP); Yano, Motoyasu, Kosai-city Shizuoka-pref., 431-0493 (JP); Matsumoto, Hiroshi, Kosai-city Shizuoka-pref., 431-0493 (JP); Kobayashi, Yukio, Kosai-city Shizuoka-pref., 431-0493 (JP); Hirota, Yoshito, Kosai-city Shizuoka-pref., 431-0493 (JP); Takagi, Atsushi, Kosai-city Shizuoka-pref., 431-0493 (JP)
(74) Representative: Kuhnen & Wacker

(56) References cited:
- DE-A1- 4 116 968
- DE-A1- 19 745 460
- DE-A1- 19 938 662
- DE-A1- 19 938 664
- US-A- 5 946 764

## Description

The present invention relates to a wiper blade, which includes a lever assembly made by connecting levers in tournament style, and more particularly to a wiper blade suitable for wiping a surface of a vehicle front glass (a windshield), which shows a large change in a curvature of the surface. The present invention further relates to a vehicle wiper system having such a wiper blade.

In general, a wiper blade for wiping a surface of a vehicle front glass (a windshield) includes a lever assembly, which is made by connecting metal levers in tournament style. The lever assembly holds a wiper strip, to which backing plates are installed. However, such a wiper blade generally does not have good appearance due to exposure of the lever assembly, which includes the metal levers.

To address the above disadvantages, for example, Japanese Unexamined Utility Model Publication No. H07-28759 or H07-26266 discloses a wiper blade, in which levers of a lever assembly are made of synthetic resin and are shaped to have integral appearance after assembly of the levers into the lever assembly to improve appearance of the wiper blade.

Furthermore, a fin is integrally formed in each lever recited in Japanese Unexamined Utility Model Publication No. H07-28759 to limit lifting of the wiper blade from the glass surface during traveling of the vehicle. It has been also proposed to install a separately manufactured fin member to the lever assembly of the wiper blade, which includes the metal levers. However, in the fin member, which is formed separately from the lever assembly, legs are provided in a plate-like fin, which is elongated in a longitudinal direction of the wiper strip. The fin member is installed to the lever assembly through the legs. Thus, depending on the installation position of the fin member, the fin member may cause an increase in the size of the wiper blade in a transverse direction or in a vertical direction. Furthermore, the lever assembly is directly exposed and is not made integrally with the fin member. Thus, appearance of the wiper blade is not good.

Furthermore, the fin member, which is recited in Japanese Unexamined Utility Model Publication No. H07-28759 , or the fin member, which is formed separately and is installed to the lever assembly, may have a top ridge, which shows a constant amount of offset relative to a center line of the wiper blade. Thus, the effect for limiting the lifting of the wiper blade from the glass surface is not significant.

US-B-5946764 discloses a wiper blade comprising a wiper strip that directly wipes a wiping surface, a lever assembly that holds the wiper strip and includes a plurality of levers which are connected together, wherein an axial length of the lever assembly is shorter than an axial length of the wiper strip, and a fin member that is installed to the lever assembly and has a fin arrangement wherein the fin arrangement exerts an urging force for urging of a wiper strip against the wiping surface when the fin arrangement receives a head wind, wherein the fin member has a top ridge which is offset from a center line of the wiper strip in a transverse direction of the wiper blade on a first side of the center line of the wiper strip.

It is an objective of the preset invention to provide a wiper blade, which effectively limits lifting of the wiper blade from a wiping surface at time of traveling of a vehicle. This object of the present invention is achieved by a wiper blade having the features of attached claim 1.

Further advantageous improvements and developments are subject-matter of patent claims 2 to 8. The object underlying the present invention is also achieved by a vehicle wiper system in accordance with claim 9.

The invention, together with additional objectives, features and advantages thereof, will be best understood from the following description, the appended claims and the accompanying drawings in which:
FIG. 1A is a side view of a wiper blade, to which a cover member of an embodiment of the present invention is installed;
FIG. 1B is a side view of the wiper blade before the installation of the cover member of the embodiment;
FIG. 2A is an enlarged partial view of FIG. 1A;
FIG. 2B is an enlarged partial view of FIG. 1B;
FIG. 3 is an exploded perspective view of a wiper blade of the embodiment;
FIG. 4A is a cross sectional view along line XXVIIIA-XXVIIIA in FIG. 2A;
FIG. 4B is a cross sectional view along line XXVIIIB-XXVIIIB in FIG. 2A;
FIG. 4C is a cross sectional view along line XXVIIIC-XXVIIIC in FIG. 2A;
FIG. 5A is a cross sectional view along line XXIXA-XXIXA in FIG. 2A;
FIG. 5B is a cross sectional view along line XXIXB-XXIXB in FIG. 2A;
FIG. 5C is a cross sectional view along line XXIXC-XXIXC in FIG. 2A;
FIG. 6 is a perspective view showing a modification of the embodiment;
FIG. 7A is a cross sectional view along line XXXIA-XXXIA in FIG. 6;
FIG. 7B is a cross sectional view along line XXXIB-XXXIB in FIG. 6;
FIG. 7C is a cross sectional view along line XXXIC-XXXIC in FIG. 6;
FIG. 8 is a perspective view showing one side of a cover member in a modification of the embodiment;
FIG. 9A is a perspective view showing one side of a cover member in another modification of the embodiment;
FIG. 9B is a plan view of FIG. 9A;
FIG. 10A is a cross sectional view showing a modification of the structure of the fifth embodiment shown in FIG. 5B;
FIG. 10B is a cross sectional view showing a modification of the structure of the fifth embodiment shown in FIG. 5C;
FIG. 11 is a cross sectional view showing a further modification of the structure of the fifth embodiment shown in FIG. 5B; and
FIG. 12 is a cross sectional view showing a modification of an offset amount of a top ridge of a side cover portion shown in FIG. 10B.

An embodiment of the present invention will be described with reference to the accompanying drawings.

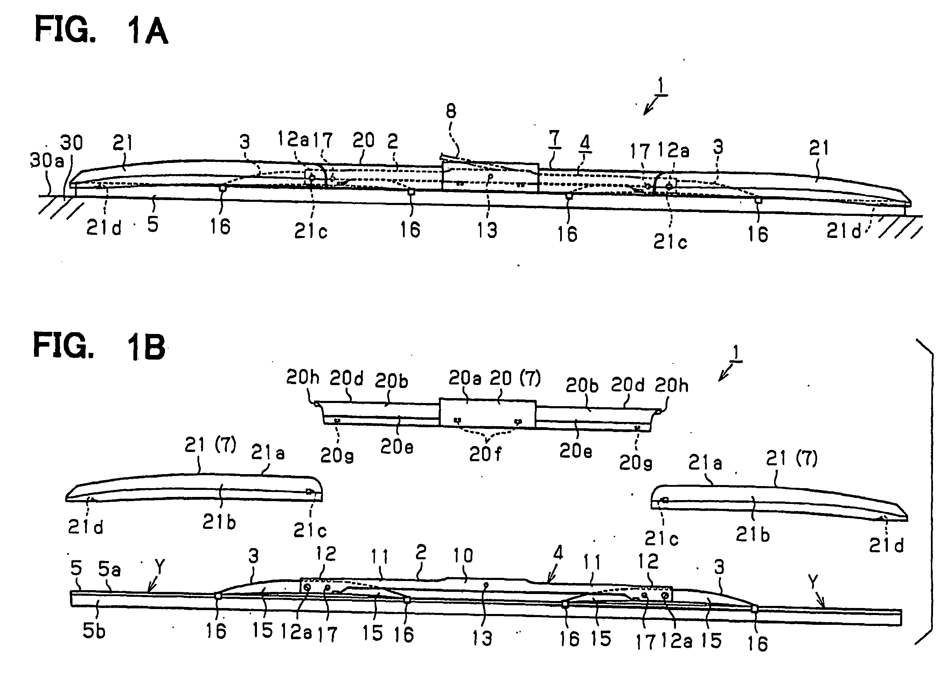

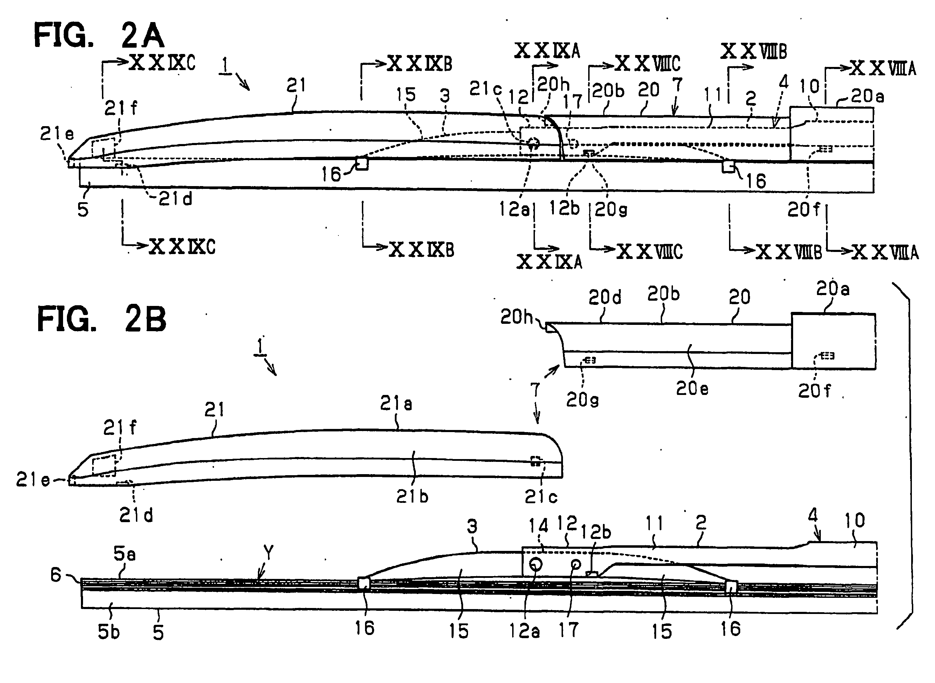

FIG 1A shows the wiper blade 1 of the present embodiment. As shown in FIGS. 1A to 3, the wiper blade 1 includes a lever assembly 4, a wiper strip 5, two backing plates 6 and a cover member 7. The lever assembly 4 includes a primary lever 2 and two secondary levers 3, which are connected in tournament style.

In the lever assembly 4, the primary lever 2 is formed through a press working process of a metal plate material such that the primary lever 2 has a mountain fold, which including a lower side (wiper strip 5 side) opening that extends along the entire length of the primary lever 2 in the longitudinal direction. The primary lever 2 includes a connecting arrangement 10, two arms 11 and two connections 12. The connecting arrangement 10 is provided in a longitudinal center of the primary lever 2. The arms 11 longitudinally extend from opposed ends of the connecting arrangement 10. The connections 12 are provided to distal ends of the arms 11, respectively, i.e., are provided to opposed ends, respectively, of the primary lever 2.

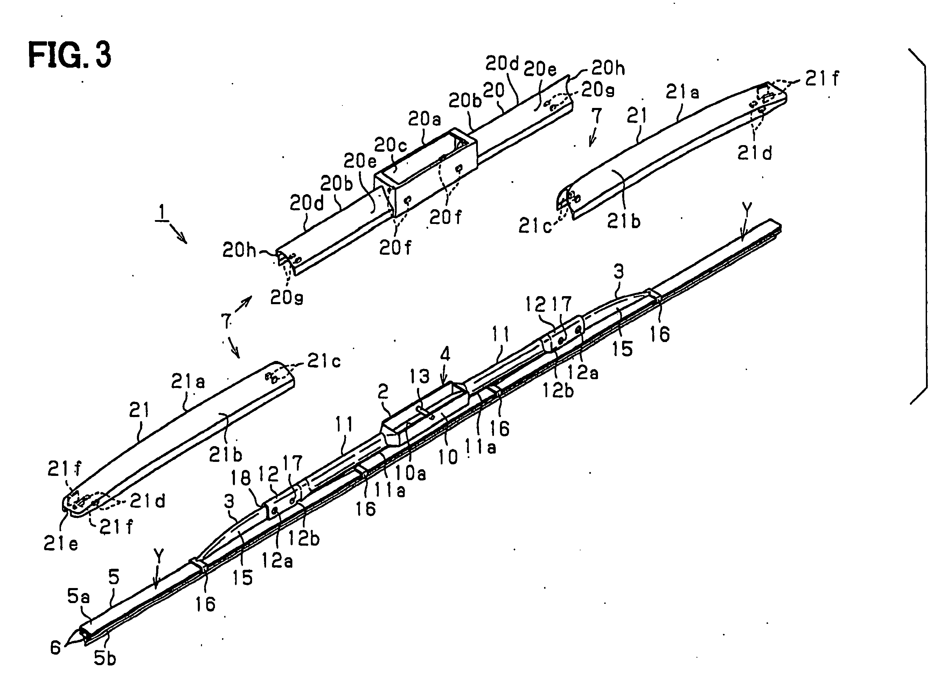

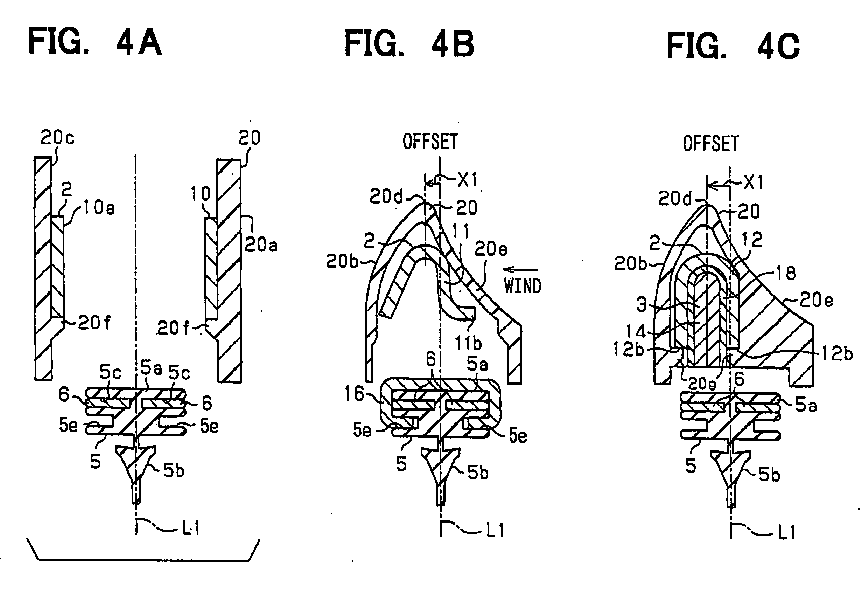

As shown in FIGS. 3 and 4A, the connecting arrangement 10 has a rectangular opening 10a for receiving the distal end of the wiper arm 8, and two lateral walls of the connecting arrangement 10 are bent to extend parallel to each other. A transverse center of the connecting arrangement 10 coincides with a center line L1 of the wiper blade 1 (the wiper strip 5). A connecting pin 13 is provided to the connecting arrangement 10 to rotatably connect with the distal end of the wiper arm 8 through a connecting clip (not shown).

As shown in FIG 4B, each arm 11 is formed to have a generally V-shaped cross section, which has an opening on the lower side thereof (the wiper strip 5 side) and diverges toward the opening. A transverse center of the arm 11 is offset a predetermined distance from the center line L1 of the wiper blade 1 on one transverse side of the center line L1. The offset amount of the transverse center of the arm 11 of the present embodiment is set to be substantially the same as the offset amount X1 of each of fin sections 20e, 21b of the cover member 7 described below. The other transverse side of the arm 11 is bent outwardly in the transverse direction to form a bent part 11b, which improves the rigidity of the arm 11.

As shown in FIG 4C, the connection 12 is bent to have a generally U-shaped cross section, which has an opening on the lower side thereof (the wiper strip 5 side). A center of the corresponding secondary lever 3 is rotatably connected to the connection 12 through a connecting pin 17.

Two connecting holes 12a penetrate through distal end side lateral walls, respectively, of the connection 12, which are located distally of the connecting pin 17. Each connecting hole 12a extends along a straight line, which is parallel to an axis of the connecting pin 17. The connecting holes 12a receive connecting projections 21 c, respectively, which are provided in the cover member 7.

Each secondary lever 3 is formed to have a mountain fold, which extends in the longitudinal direction, through a press working process of a metal plate material. The secondary lever 3 includes a connection 14, two arms 15 and two holding parts 16. The connection 14 is provided in a longitudinal center of the secondary lever 3. The arms 15 longitudinally extend from opposed ends of the connection 14. The holding parts 16 are provided to distal ends of the arms 11, respectively, i.e., are provided to opposed ends, respectively, of the secondary lever 3.

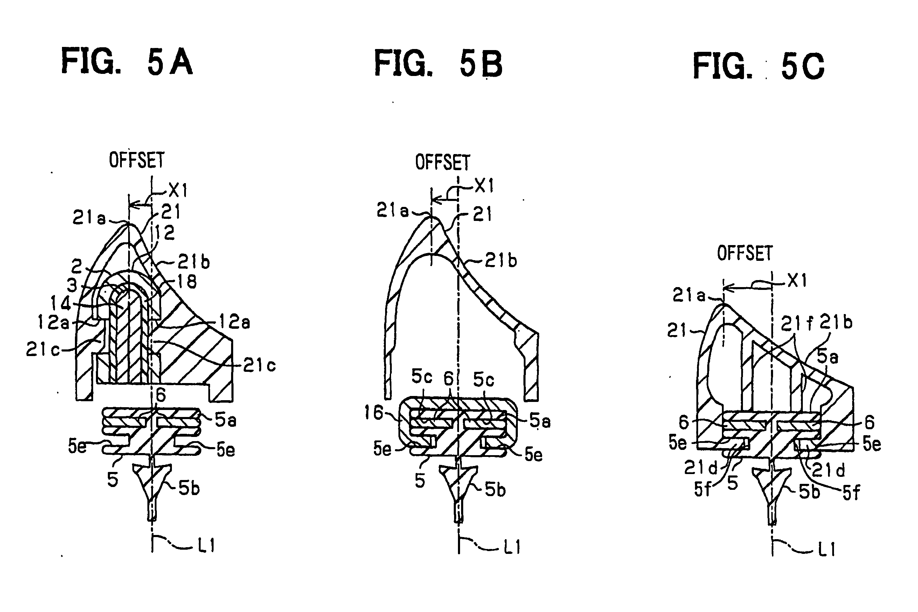

As shown in FIGS. 4C and 5A, each of the connection 14 and the arms 15 is formed to have the mountain fold in such a manner that two lateral walls thereof are placed next to each other. The connection 14 is received in the connection 12 of the primary lever 2 and is rotatably connected to the connection 12 via the connecting pin 17. A damper 18 is interposed between the connection 14 of each secondary lever 3 and the corresponding connection 12 of the primary lever 2. The damper 18 is made of a synthetic resin material and is configured to have a generally U-shaped cross section, which has an opening on the lower side thereof (the wiper strip 5 side). The damper 18 is arranged between the connection 12 of the primary lever 2 and the connection 14 of the secondary lever 3 in such a manner that the connecting pin 17, which connects the secondary lever 3 to the primary lever 2, extends through the damper 18. The damper 18 is provided to achieve smooth rotational movement of the secondary lever 3 relative to the primary lever 2 while limiting chattering movement between the secondary lever 3 and the primary lever 2.

A transverse center of a base end of each arm 15 is offset a predetermined offset amount equal to the offset amount of the arm 11 of the primary lever 2 from the center line L1 of the wiper blade 1, so that the arm 15 and the adjacent arm 11 of the primary lever 2 extend generally along a straight line.

The holding parts 16 of the arms 15, which are provided to distal ends of the arms 15, i.e., which are provided to the opposed ends of the secondary lever 3, are bent to have a generally C-shaped cross section, which is opened on a lower side thereof (the wiper strip 5 side), as shown in FIG 5B. A transverse center of each holding part 16 coincides with the center line L1 of the wiper blade 1. The base 5a of the wiper strip 5, to which the backing plates 6 are mounted, is inserted into the respective holding parts 16 in the longitudinal direction, so that distal ends of each of the holding parts 16 are received in the holding grooves 5e of the base 5a of the wiper strip 5, which extend continuously in the base 5a of the wiper strip 5. The holding parts 16 hold the wiper strip 5 in a manner that allows flexing of the wiper strip 5 in conformity with the curvature of the glass surface 30a of the wiper strip 5.

The wiper strip 5 is elongated and is made of a resilient material, such as a rubber material or a resilient synthetic material. As shown in FIGS. 4A to 5C, the wiper strip 5 includes the base 5a and a wiping lip 5b. The base 5a is held by the holding parts 16 of the lever assembly 4. The wiping lip 5b extends from the base 5a at the center line L1 of the wiper blade 1, and a distal end of the wiping lip 5b directly wipes, for example, rain droplets on the glass surface 30a. The base 5a and the wiping lip 5b extend continuously in the longitudinal direction of the wiper strip 5. In the following respective drawings, some lines on a lateral side surface of the wiper strip 5 are eliminated for the sake of clarity.

Two backing plate receiving grooves 5c extend longitudinally in the base 5a of the wiper strip 5 above the holding grooves 5e (on the side opposite from the wiping lip 5b). The backing plates 6, each of which is formed into an elongated plate from a metal material having a spring characteristic, are received in the backing plate receiving grooves 5c, respectively. In each corresponding drawing, the backing plates 6 are drawn to extend along the straight line for the sake of clarity of the drawing. However, in reality, in a natural state (in an unloaded state), slightly arcuately curved segments are continuously provided one after another in the longitudinal direction in each backing plate 6, so that a longitudinal center of the backing plate 6 is convexly curved in a direction away from the glass surface 30a. In this state, a curvature of the backing plate 6 is larger than that of the glass surface 30a, i.e., a radius of curvature of the backing plate is smaller than that of the glass surface 30a. With the above structure, the wiper strip 5 is curved in conformity with the shape of the backing plates 6. At the time of wiping the glass surface 30a, when the urging force is applied from the wiper arm 8, the urging force is spread over the wiper strip 5 through the lever assembly 4, so that the wiper strip 5 is flexibly and resiliently deformed in conformity with the curvature of the glass surface 30a. The urging force, which is applied from the wiper arm 8 toward the glass surface 30a and is distributed by the lever assembly 4, is spread by the backing plates 6 over the wiper strip 5 in the longitudinal direction.

In the present embodiment, each of the wiper strip 5 and the backing plates 6 are formed to protrude outwardly a predetermined length from the corresponding outermost holding part 16 of the lever assembly 4 in the longitudinal direction to allow appropriate flexing of the wiper strip 5 in conformity with the curvature of the glass surface 30a. Each section of the wiper strip 5 (including the backing plates 6), which is located between the corresponding end of the wiper strip 5 and the closest outermost holding part 16 ofthe lever assembly 4, is referred to as a follower end section Y

As shown in FIG 3, the cover member 7, which forms a fin member, includes the center cover portion 20 and the two side cover portions 21. The side cover portions 21 are located at opposed ends, respectively, of the center cover portion 20. Each of the center cover portion 20 and the side cover portions 21 is made of the synthetic resin material and has a predetermined rigidity. The cover member 7, i.e., the fin member is installed to the lever assembly 4 along the length of the lever assembly 4. The center cover portion 20 and the side cover portions 21 receive and cover the lever assembly 4. Furthermore, the center cover portion 20 and the side cover portions 21 extend to the ends of the wiper strip 5. That is, a longitudinal length of the cover member 7 is longer than a longitudinal length of the lever assembly 4, so that the cover member 7 extends from the one end to the other end of the wiper strip 5 to provide an integral appearance together with the wiper strip 5.

The center cover portion 20 includes a connecting arrangement cover segment 20a and two arm cover segments 20b. The connecting arrangement cover segment 20a is provided generally in a center of the center cover portion 20 and covers the connecting arrangement 10 of the primary lever 2. The arm cover segments 20b are arranged at opposed ends, respectively, of the connecting arrangement cover segment 20a to generally entirely cover the arms 11 of the primary lever 2.

As shown in FIG 4A, the connecting arrangement cover segment 20a is formed to have parallel lateral walls, and a transverse center of the connecting arrangement cover segment 20a coincides with the center line L1 of the wiper blade 1. A rectangular opening 20c is formed in a top of the connecting arrangement cover segment 20a to expose the connecting arrangement 10 therefrom.

As shown in FIG 4B, each arm cover segment 20b is formed to have a generally V-shaped cross section, which is opened on a lower side thereof (the wiper strip 5 side). Each arm cover segment 20b extends such that a distal end of the arm cover segment 20b does not reach the connecting hole 12a of the corresponding connection 12 of the primary cover 2.

Similar to the arms 11 of the primary lever 2, the top ridge 20d of each arm cover segment 20b is offset the offset amount X1 from the center line L1 of the wiper blade 1 on the one transverse side of the center line L1. That is, at a stop position of the wiper arm 8, the top ridge 20d is offset the offset amount X1 from the center line L1 on the head wind downstream side (on a vehicle rear side) of the center line L1. As shown in FIGS. 4B and 4C, the offset amount X1 of the top ridge 20d is set to increase toward the longitudinal distal end side of the arm cover segment 20b (toward the longitudinal end side of the wiper blade 1).

The fin section 20e is integrally formed in the arm cover segment 20b to extend from the top ridge 20d into the other transverse side of the center line L1 of the wiper blade 1. The fin section 20e is formed into a slant surface, which generates an urging force for urging the wiper blade 1 against the glass surface 30a upon receiving the head wind applied to the traveling vehicle. The fin section 20e is formed to extend from the top ridge 20d, which is offset from the center line L in the manner described above, so that a transverse size of the fin section 20e is increased while limiting an increase in a transverse size of the arm cover segment 20b. Since the offset amount X1 is set to increase toward the longitudinal distal end of the arm cover segment 20b, a transverse size of the fin section 20e also increases progressively toward the distal end of the arm cover segment 20b.

As shown in FIGS. 3 and 4A, four engaging protrusions 20f are formed in an inner surface of the connecting arrangement cover segment 20a to engage with lower surfaces of the connecting arrangement 10 of the primary lever 2 at predetermined four locations. As shown in FIGS. 3 and 4C, two engaging protrusions 20g are formed in an inner surface of a distal end of each arm cover segment 20b to engage with lower surfaces of the corresponding connection 12 of the primary lever 2 at predetermined two locations. When the center cover portion 20 is installed to the lever assembly 4, each engaging protrusion 20f, 20g engages the lower surface of the corresponding one of the connecting arrangement 10 and the connections 12 to limit movement of the center cover portion 20 in the direction opposite from the installation direction of the center cover portion 20.

The two side cover portions 21 are symmetrically configured, as shown in FIG 3. The side cover portion 21 is formed to have a generally V-shaped cross section, which is opened on a lower side thereof (the wiper strip 5 side). Each side cover portion 21 extends from a point, at which the connecting hole 12a of the corresponding connection 12 of the primary lever 2 is provided, to the corresponding end of the wiper strip 5. Furthermore, a height of the top ridge 21a of the side cover portion 21 is progressively decreased from a predetermined longitudinal point toward the distal end (the end of the wiper strip 5). A window 21 e is provided in the distal end of each side cover portion 21 in a form of a recess, which is recessed from the lower edge of the distal end of the side cover portion 21. The wiper strip 5, to which the backing plates 6 are mounted, can be inserted through the window 21e in the longitudinal direction. That is, even in the state where the side cover portions 21 are installed to the primary lever 2, the wiper strip 5 can be installed to the lever assembly 4 through the window 21 e in the longitudinal direction.

The top ridge 21a of the base end of the side cover portion 21 is offset a predetermined amount X1, which is the same as that of the arm cover segment 20b of the center cover portion 20, from the center line L1 of the wiper blade 1 on the one transverse side of the center line L1 to continuously extend from the top ridge 20d of the adjacent arm cover segment 20b of the center cover portion 20. That is, at a stop position of the wiper arm 8, the top ridge 21a is offset the offset amount X1 from the center line L1 on the head wind downstream side (on a vehicle rear side) of the center line L1. As shown in FIGS. 5A to 5C, each side cover portion 21 is set such that the offset amount X1 of the top ridge 21a increases toward the longitudinal distal end side of the side cover portion 21 (the longitudinal end side of the wiper blade 1). Similar to the arm cover segment 20b, a fin section 21b is integrally formed in the side cover portion 21 to extend from the top ridge 21a into the other transverse side of the center line L1 of the wiper blade 1. The fin section 21b is formed into a slant surface, which generates an urging force for urging the wiper blade 1 against the glass surface 30a upon receiving the head wind applied to the traveling vehicle. The fin section 21b is formed to extend from the top ridge 21a, which is offset from the center line L in the manner described above, so that a transverse size of the fin section 21 b is increased while limiting an increase in a transverse size of the side cover portion 21. Since the offset amount X1 is set to increase toward the longitudinal distal end of the side cover portion 21, a transverse size of the fin section 21b also increases progressively toward the distal end of the side cover portion 21.

That is, in the present embodiment, the generally entire longitudinal region of each fin section 20e, 21 b has an enlarging fin section, in which the top ridge 20d, 21a is offset from the center line L1 of the wiper blade 1 on the one transverse side of the center line L1 of the wiper blade 1, and the offset amount X1 of the top ridge 20d, 21a increases progressively toward the longitudinal distal end of the lever assembly 4. In this case, it is preferred that each top ridge 20d of the center cover portion 20 and the top ridge 21 a of the adjacent side cover portion 21 are continuously formed to provide a good appearance.

Furthermore, as shown in FIG 5A, the two connecting projections 21 c are formed in the inner surface at the base end of each side cover portion 21. The connecting projections 21c are received in the connecting holes 12a of the corresponding connection 12 of the primary lever 2, so that the connecting projections 21c are rotatably connected to the corresponding connection 12. Furthermore, as shown in FIG 5C, holding parts 21 d are formed in the inner surface of the distal end of each side cover portion 21 to receive the base 5a ofthe wiper strip 5 in the longitudinal direction. The holding portions 21d are received in the holding grooves 5e of the base 5a of the wiper strip 5 to hold the base 5a of the wiper strip 5 on the distal end side of the outermost holding part 16 of the lever assembly 4 to allow flexing of the wiper strip 5 in conformity with the curvature of the glass surface 30a. That is, each side cover portion 21 directly holds the wiper strip 5 through the holding parts 21 d. Two wiper strip urging projections 21f project downwardly from the inner surface of the side cover portion 21 at a location distally of the outermost holding part 16. In each side cover portion 21, the wiper strip urging projections 21f are arranged on the opposed transverse sides of the center line L1 of the wiper blade 1. Furthermore, each wiper strip urging projection 21f engages an intermediate transverse part of the top surface of the wiper strip 5 between the center line L1 of the wiper blade 1 and a corresponding transverse edge of the top surface of the wiper strip 5 to urge the corresponding end of the wiper strip 5 against the glass surface 30a and thereby to flex the end of the wiper strip 5 in conformity with the curvature of the glass surface 30a.

An upper part of the base end of each side cover portion 21 is curved into an arcuate shape where a center of the arc of the arcuate shape coincides with the rotational center (the connecting projections 21c) of the side cover portion 21 when the base end of the side cover portion 21 is viewed from a lateral side of the side cover portion 21. Each end of the center cover portion 20 (the end of each of the arm covert segments 20b), which is opposed to the base end of the corresponding side cover portion 21, is concavely curved when the end of the center cover portion 20 is viewed from the lateral side of the center cover portion 20. Thus, when the side cover portion 21 is pivoted, i.e., is rotated relative to the center cover portion 20, a change in a size of a space between the side cover portion 21 and the center cover portion 20 is minimized. When viewed from the lateral side, an opposite side can be seen through a top side of the space between the side cover portion 21 and the center cover portion 20, at which the lever assembly 4 is not disposed. In order to limit this, a rib 20h, which extends linearly downward, is provided to each end of the center cover portion 20. Furthermore, the rib 20h advantageously limits formation of a sharp part at the top of the corresponding end of the center cover portion 20.

The center cover portion 20 of the cover member 7 is installed, i.e., is snap fitted to the primary lever 2 in such a manner that the center cover portion 20 receives the primary lever 2 of the lever assembly 4 through its bottom opening. At this time, the center cover portion 20 is resiliently outwardly deformed in the transverse direction by the amount that corresponds to the protruding lengths of the engaging protrusions 20f, 20g. When each engaging protrusion 20f, 20g reaches the lower surface of the corresponding one of the connecting arrangement 10 and the connections 12, the engaging protrusion 20f, 20g resiliently returns to its normal state. Then, each engaging protrusion 20f engages the lower end surface of the connecting arrangement 10, and each engaging protrusion 20g engages the engaging groove 12b of the lower end surface of the connection 12. Thus, the center cover portion 20 is installed to the lever assembly 4 in a manner that limits removal of the center cover portion 20 from the lever assembly 4. The center cover portion 20 covers generally the entire primary lever 2 from the portion of one of the connections 12, at which the corresponding connecting pin 17 is provided, to the portion of the other one of the connections 12, at which the other connecting pin 17 is provided.

Furthermore, each side cover portion 21 receives the outer arm 15 of the corresponding secondary lever 3 of the lever assembly 4 through the bottom opening of the side cover portion 21. Also, the side cover portion 21 is installed to the corresponding connection 12 of the primary lever 2 and the end of the wiper strip 5 while the side cover portion 21 extends distally from the outer arm 15 over the top of the follower end section Y of the wiper strip 5. Specifically, the connecting projections 21c of each side cover portion 21 are fitted into the connecting holes 12a of the corresponding connection 12 of the primary lever 2. Thereafter, the base 5a of the wiper strip 5 is inserted to the holding parts 21d of the side cover portions 21 and the holding parts 16 of the lever assembly 4 through the distal window 2 1 e of the corresponding side cover portion 21 in the longitudinal direction. In this way, each side cover portion 21 is installed to the lever assembly 4 and the wiper strip 5 in such a manner that removal of the side cover portions 21 from the lever assembly 4 and the wiper strip 5 is limited. Each side cover portion 21 extends continuously from the secondary cover portion 20 (the arm cover segment 20b), more specifically, from the corresponding point of the connection 12 of the primary lever portion 2, at which the connecting holes 12a are provided, until the end of the wiper strip 5 to cover the outer arm 15 of the corresponding secondary lever 3. When the side cover portions 21 and the center cover portion 20 are installed to the lever assembly 4, the lever assembly 4 is covered with the side cover portions 21 and the center cover portion 20, so that the wiper blade 1 of the present embodiment is formed to have the integral appearance, in which the wiper strip 5 appears to be integral with the side cover portions 21 and the center cover portion 20.

In the wiper blade 1, which has the cover member 7, the holding parts 21d, which are provided in the distal end of each side cover portion 21, engage the corresponding end of the base 5a of the wiper strip 5 in the vertical direction. Thus, when the wiper strip 5 is flexed in conformity with the curvature of the glass surface 30a, which is wiped by the wiper strip 5, each side cover portion 21 pivots, i.e., rotates about the connecting projections 21c of the side cover portion 21 to follow the flexing of the wiper strip 5. That is, even when the wiper strip 5 is flexed, a substantial space is not formed between each side cover portion 21 and the corresponding end of the wiper strip 5, so that the good appearance is achieved.

Furthermore, in each side cover portion 21, the holding parts 21d, which are provided to the distal end of the side cover portion 21, engage the corresponding end of the base 5a of the wiper strip 5. Also, the wiper strip urging projections 21f, which are provided to the distal end of the side cover portion 21, contact the top surface of the wiper strip 5 to urge the wiper strip 5 against the glass surface 30a side. Thus, the urging force, which is generated toward the glass surface 30a at the fin section 21b of the side cover portion 21 at the time of traveling of the vehicle, is directly transmitted to the corresponding follower end section Y of the wiper strip 5 from the holding parts 21 d and the wiper strip urging projections 21f without passing through the lever assembly 4. Therefore, at the time of traveling of the vehicle, each end of the wiper strip 5 receives the urging force, which is generated by the corresponding fin section 21b, so that the end of the wiper strip 5 is urged against the glass surface 30a. Therefore, lifting of each end of the wiper strip 5 from the glass surface 30a is reliably limited to improve the wiping performance of the wiper strip 5. Furthermore, in the wiper strip 5, each follower end section Y, which protrudes distally from the closest outermost holding part 16 of the lever assembly 4, has a length, which is equal to or greater than a longitudinal space between the adjacent two holding parts 16 of the lever assembly 4. Thus, the wiper blade 1 of the present embodiment has a particularly effective structure.

Next, characteristic advantages of the wiper blade 1 of the present embodiment will be described.
(1) The cover member 7 also serves as the fin member, which has the fin sections 20e, 21 b, and the side cover portions 21 of the cover member 7 serve as the movable fin portions. The connecting projections 21c of each side cover portion 21, which serves as the movable fin portion, are fitted into the connecting holes 12a of the corresponding connection 12 of the primary lever 2, so that the base of the side cover portion 21 is pivotably connected to the lever assembly 4. As a result, each side cover portion 21 can pivot in conformity with flexing of the wiper strip 5. Furthermore, the holding parts 21 d of the side cover portion 21 hold the wiper strip 5 at the point, which is distally of the closest outermost holding part 16 of the lever assembly 4, i.e., which is located between the corresponding end of the wiper strip 5 and the closest holding part 16 of the lever assembly 4. Thus, the holding parts 2 1 d of the distal end of each side cover portion 21 hold the wiper strip 5 at the position distally of the outermost holding part 16 of the lever assembly 4, i.e., at the follower end section Y Thus, the urging force, which is generated toward the glass surface 30a at the side cover portion 21 at the time of the traveling of the vehicle, is directly transmitted to the end of the wiper strip 5 from the holding parts 21d of the side cover portion 21. Therefore, at the time of traveling of the vehicle, each end of the wiper strip 5 receives the urging force, which is generated by the corresponding side cover portion 21, so that the end of the wiper strip 5 is urged against the glass surface 30a. Therefore, lifting of each end of the wiper strip 5 from the glass surface 30a is reliably limited to improve the wiping performance of the wiper strip 5.
(2) The distal end of each side cover portion 21 has the wiper strip urging projections 21f, which contact the top surface of the wiper strip 5. Thus, the wiper strip urging projections 21 f of each side cover portion 21 receive the urging force, which is generated toward the glass surface 30a at the side cover portion 21 at the time of the traveling of the vehicle, so that the wiper strip urging projections 21 f urge the top surface of the wiper strip 5 against the glass surface 30a. Therefore, the wiper strip 5 is reliably urged against the glass surface 30a. As a result, with the above structure, the lifting of each end of the wiper strip 5 from the glass surface 30a is also reliably limited to improve the wiping performance of the wiper strip 5.
(3) The cover member 7, which also serves as the fin member, has the top ridge 20d, 21a, which extends in the longitudinal direction on the side opposite from the glass surface 30a and which is offset from the center line L1 of the wiper blade 1 on the one transverse side of the center line L1 of the wiper blade 1. The fin section 20e, 21b extends from the top ridge 20d, 21a into the other transverse side of the center line L1 of the wiper blade 1. Thus, the fin section 20e, 21b is formed to extend from the top ridge 20d, 21a, which is offset from the center line L1 of the wiper blade 1, so that a transverse size of the fin section 20e, 21b is increased while limiting an increase in a transverse size of the cover member 7.
(4) Each fin section 20e, 21b has the enlarging fin section, in which the top ridge 20d, 21a is offset from the center line L1 of the wiper blade 1 on the one transverse side of the center line L1 of the wiper blade 1, and the offset amount X1 of the top ridge 20d, 21a increases progressively toward the longitudinal distal end of the lever assembly 4. Thus, while limiting an increase in the transverse size of the cover member 7 (the fin member), the transverse size of the fin section can be increased to improve the fin function (the function for limiting the lifting of the wiper strip from the glass surface through use of the head wind, i.e., the supplementing function for supplementing the blade urging force). Also, the transverse size of the fin section of the fin member can be set to progressively increase toward the longitudinal distal end of the fin member. Thus, the lifting of the end of the wiper strip 5 from the glass surface 30a is more reliably limited to improve the wiping performance of the wiper strip 5.
(5) The cover member 7, which also serves as the fin member, is formed into the recessed form that has its opening on the wiper strip 5 side thereof. The lever assembly 4 is received in the cover member 7 through the opening, which is formed on the wiper strip 5 side of the cover member 7. Thus, the lever assembly 4 is received and is coved by the cover member 7, and thereby the good appearance of the wiper blade I is achieved. Furthermore, the cover member 7 also serves as the fin member, so that an increase in the number of the components of the wiper blade 1 can be limited.
(6) The side cover portions 21 are paired and are symmetrically provided on the longitudinal sides, respectively, of the connecting arrangement 10, to which the wiper arm 8 is connected. Thus, the longitudinal sides of the wiper blade 1 are appropriately balanced, and the appearance of the wiper blade 1 is improved.
(7) The side cover portions 21 are rotatably connected to the primary lever 2. Therefore, since the side cover portions 21 are rotatably connected to the metal primary lever 2, which has the relatively high strength and rigidity, the side cover portions 21 can be more effectively connected to the primary lever 2 in comparison to, for example, a case where the side cover portions 21 are connected to the resin center cover portion 20.
(8) The connecting projections 21c are formed in the inner surface of the base end of each side cover portion 21, and the connecting holes 12a are formed in each connection 12 of the primary lever 2. Since the primary lever 2 is made of the metal, it is relatively easy to form the connecting holes 12a in the primary lever 2 in comparison to a case where the connecting projections are formed in the primary lever.
(9) The base end of each side cover portion 21 is connected to the corresponding connection 12 of the primary lever 2 through the connecting projections 21 c, and the distal end of each side cover portion 21 is installed to the corresponding end of the wiper strip 5 through the holding parts 21 d. The backing plates 6, each of which has the relatively high rigidity, are installed to the wiper strip 5, so that the ends of each side cover portion 21 are both supported by the components (the backing plates 6), which have the relatively high rigidity, and thereby each side cover portion 21 is not supported only at the one end. As a result, even when a relatively large external force is applied from, for example, a car wash machine to the side cover portions 21, removal of the side cover portions 21 from the wiper blade 1 or damage of the side covers can be advantageously limited.
(10) Each side cover portion 21, which is connected to the corresponding connection 12 of the primary lever 2, has the rotational axis that extends in the transverse direction of the wiper blade 1. Thus, each side cover portion 21 is limited from moving in the transverse direction of the wiper blade 1, i.e., in the wiping direction of the wiper blade 1. Therefore, the ends of the wiper strip 5, which are held by the holding parts 21 d of the side cover portions 21, have the improved rigidity in the wiping direction. As a result, at the time of wiping the glass surface 30a, chattering of the wiper strip 5 (leaping of the wiper strip 5 from the glass surface 30a) is advantageously limited.

The present embodiment can be modified as follows.

In the above embodiment, the side cover portions 21 are rotatably connected to the lever assembly 4. Alternatively, the side cover portions 21 can be rotatably connected to the center cover portion 20.

In the above embodiment, the connecting projections 21c are provided in the side cover portions 21, and the connecting holes 12a are provided in the lever assembly 4. With this arrangement, the side cover portions 21 are rotatably connected to the lever assembly 4. Alternatively, the connecting holes may be provided in the side cover portions 21, and the connecting projections may be provided in the lever assembly 4. Also, any other connecting means other than the projections and the holes can be used. For example, each connecting pin 17 can be slightly projected outwardly on both transverse sides to rotatably connect the corresponding side cover portion 21 to the projected parts of the connecting pin 17. Alternatively, holes can be provided to the ends of each connecting pin 17 to rotatably connect the corresponding side cover portion 21 to the holes of the connecting pin 17. Furthermore, the positions of the connecting parts, such as the connecting projections 21c and the connecting holes 12a, can be changed to any other appropriate positions.

In the above embodiment, the offset amount X1 of the top ridge 20d, 21a of the cover member 7 (the center cover portion 20 and the side cover portions 21), which also serves as the fin member, is set to increase toward each longitudinal end of the cover member 7 (each longitudinal end of the wiper blade 1) in the entire longitudinal extent thereof. However, the offset amount X1 can be set to increase toward each longitudinal end of the cover member 7 (each longitudinal end of the wiper blade 1) only from a corresponding predetermined longitudinal position. That is, each enlarging fin section can be formed from a predetermined longitudinal intermediate point of the fin member toward the corresponding longitudinal end of the fin member. Here, it is preferred that "the predetermined longitudinal intermediate point" is set to a point, at which the limiting effect for limiting the lifting of the wiper blade from the glass surface becomes insufficient if the offset amount X1 is made constant from that point to the corresponding distal end of the fin member. The predetermined longitudinal intermediate point may vary depending on, for example, the length, the transverse width, the shape and/or the material of the wiper blade. Particularly, in the case of the cover member 7, which also serves as the fin member that receives the lever assembly, the predetermined longitudinal intermediate point may vary depending on the shape of the received lever assembly. Therefore, the appropriate location of the enlarging fin section may vary depending on the type of the wiper blade.

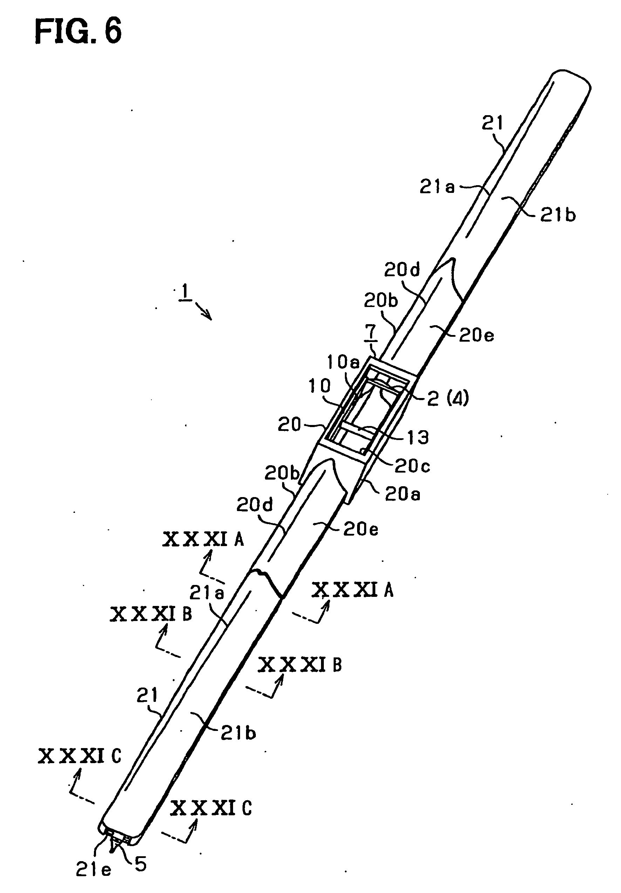

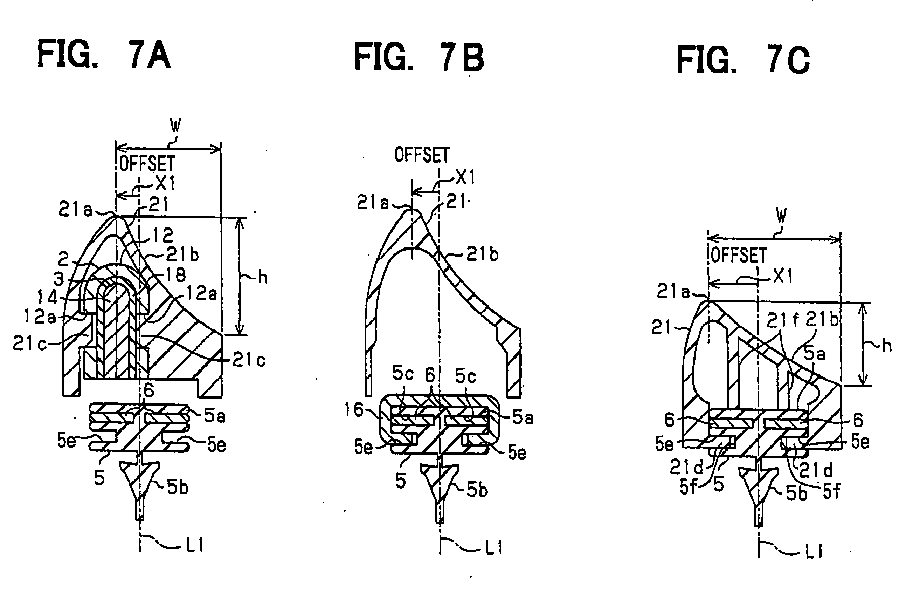

For example, in the wiper blade 1. shown in FIGS. 6 to 7C, the offset amount X1 of the top ridge 20d of the center cover portion 20 is made constant, and the offset amount X1 of the top ridge 21 a of each side cover portion 21 is set to progressively increase toward the corresponding longitudinal end. For example, with reference to FIGS. 7A and 7C, sizes of each side cover portion 21 can be set as follows. That is, when a height of the top ridge 21a, which is measured from a lower edge of the fin section 21b, is set to be "h", and a transverse distance between the top ridge 21 a and the lower edge of the fin section 21b is set to be "W", a relationship of W<h is established at the base end of the side cover portion 21, and a relationship of W>h is established at the distal end of the side cover portion 21. With this construction, the transverse size of the fin section 21 b of the side cover portion 21 can be gradually increased toward the distal end of the fin section 21b, and thereby the lifting of each end of the wiper blade 1 (the wiper strip 5) from the glass surface 30a at the time of traveling of the vehicle can be more reliably limited. In the above embodiment, the fin section 21b, which is formed in the side cover portion 21, forms the enlarging fin section.

In the above embodiment, the cover member 7 includes the single center cover portion 20 and the two side cover portions 21. However, the number of the cover portions in the cover member 7 is not limited to this and can be increased or decreased to any suitable number. For example, the cover member may include only the side cover portions, and the outer shape of the primary lever 2 may be changed to that of the center cover portion.

In the above embodiment, the lever assembly 4 includes the single primary lever 2 and the two secondary levers 3. However, the number of the levers is not limited to this.

In the above embodiment, the levers of the lever assembly 4 are made of the metal. Alternatively, the levers may be made of resin. Further alternatively, some of the levers may be made of the metal, and the rest of the levers may be made of the resin. However, the metal levers are preferred over the resin levers since the metal levers can easily achieve the required strength and rigidity.

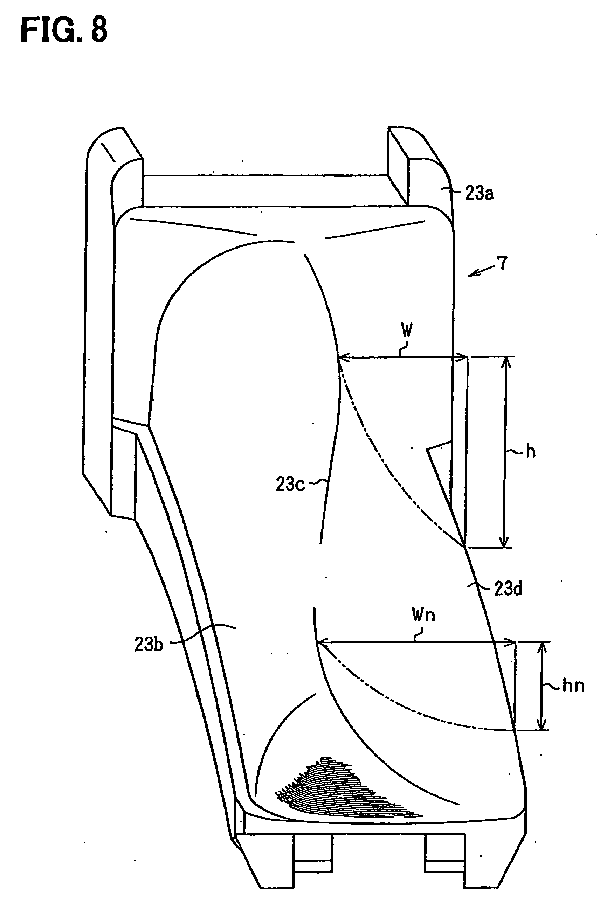

In the above embodiment, the fin member is divided into the fin portions, which include the movable fin portions. However, the fin member of the present invention is not need to be divided. For example, a single cover member may be used to cover the lever assembly 4 and the wiper strip 5. For example, the center cover portion 20 and the side cover portions 21 may be formed integrally as a fin member. FIG 8 is a schematic perspective view of one longitudinal side of a cover member 7, which is formed as such a fin member. The cover member 7 includes a connecting arrangement cover segment 23a and two arm cover segments 23b (only one of the arm cover segments 23b is shown in the drawing). The connecting arrangement cover segment 23a is provided generally in a center of the cover member 7 and covers the connecting arrangement 10 of the primary lever 2. The arm cover segments 23b are arranged at opposed ends, respectively, of the connecting arrangement cover segment 23 a to cover the arms 11 of the primary lever 2, the secondary levers 3 and the wiper strip 5. Each cover segment 23b is set such that the offset amount X1 of a top ridge 23c thereof progressively increases toward the longitudinal end of the cover segment 23b. A fin section 23d is integrally formed in the cover segment 23b to extend from the top ridge 23c into the other transverse side of the center line L1 of the wiper blade 1. The fin section 23d forms an enlarging fin section. Furthermore, when a height of the top ridge 23c, which is measured from a lower edge of the fin section 23d, is set to be "h (hn)", and a transverse distance between the top ridge 23c and the lower edge of the fin section 23d is set to be "W (Wn)", a relationship of W<h is established at the longitudinal center portion of the fin section 23d, and a relationship of Wn>hn is established at the longitudinal end of the fin section 23d. When the height h (hn) and the transverse distance W (Wn) of the fin section 23d are set as described above, a reduction in the functional surface area of the fin section 23d, which functions as the fin, is limited even when the height of the cover member 7 decreases toward the longitudinal end of the wiper blade. Thus, even when the height of the cover member 7 is small, the sufficient functional surface area, which functions as the fin, can be maintained.

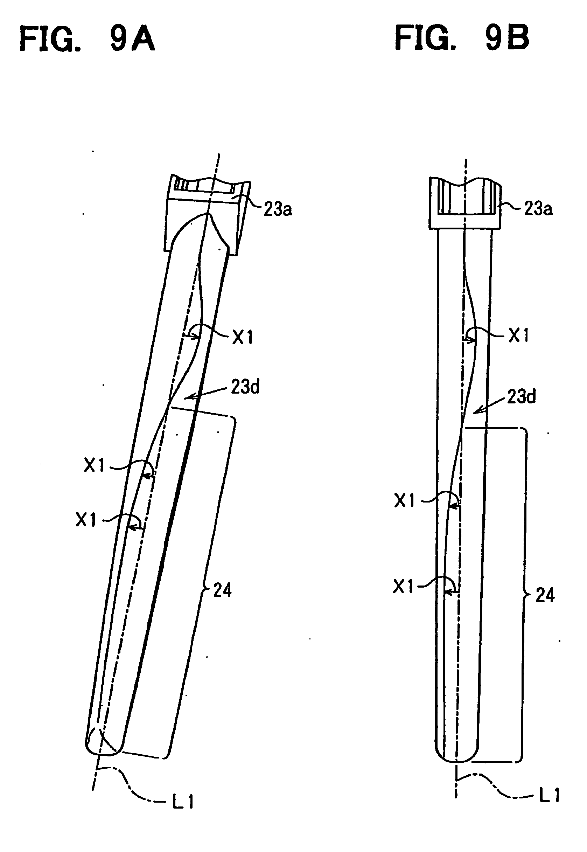

In the above embodiment, the top ridges 20d, 21a, 23c are offset from the center line L1 of the wiper blade 1 in the corresponding direction, which causes the improvement of the fin function of the fin section. However, as shown in FIGS. 9A and 9B, depending on the structure of the lever assembly, a portion of the fin section may be offset from the center line L1 of the wiper blade 1 in the other direction, which causes a decrease in the fin function. Even in such a case, it is sufficient to provide the enlarging fin section 24 from the longitudinal intermediate point to the distal end.

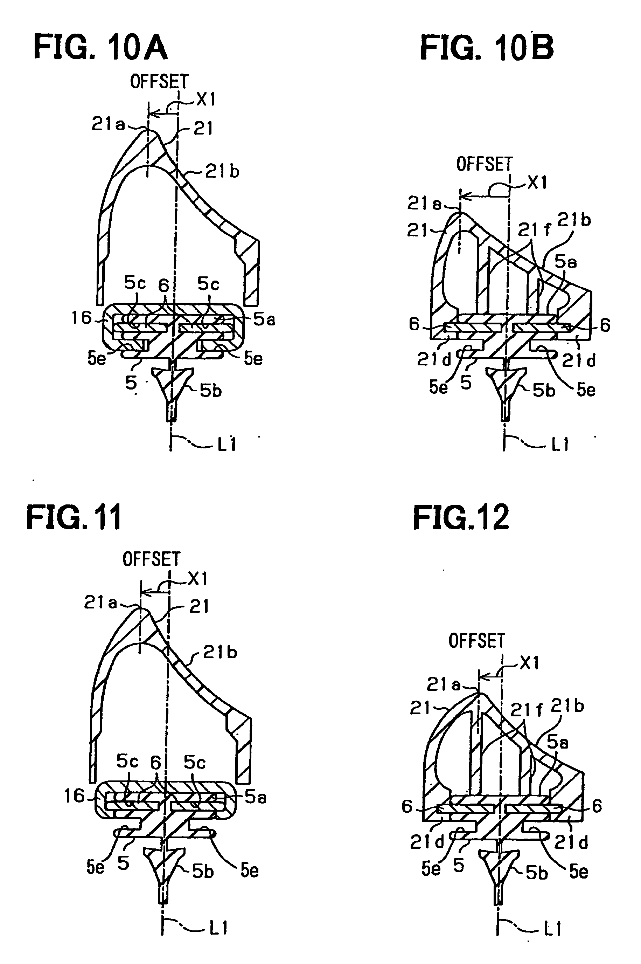

In the above embodiment, each side cover portion (the movable cover portion) directly holds the wiper strip 5 at the corresponding point, which is distally of the closest outermost holding part 16 of the lever assembly 4. Alternatively, the wiper strip 5 can be indirectly held by the side cover portions (the movable cover portions). For example, in the above described embodiment, as shown in FIGS. 10A and 10B, each backing plate 6 may be modified to have a transverse width, which causes transverse protrusion of a portion of the backing plate 6 from the corresponding backing plate receiving groove 5c. Furthermore, as shown in FIG 10B, each holding part 21 d of each side cover portion 21 may hold the corresponding protruded transverse portion of the backing plate 6 to indirectly hold the wiper strip 5. At this time, the holding parts 16, which are provided to the ends of each secondary lever 3, may hold the base 5a of the wiper strip 5 to hold the wiper strip 5, as shown in FIG 10A. Alternatively, these holding parts 16 may hold the wiper strip 5 while the holding parts 16 engage and hold the protruded transverse parts of the backing plates 6, which protrude transversely from the corresponding plate receiving grooves 5c, as shown in FIG 11. Furthermore, the offset amount X1 of the top ridge 20d, 21a of the cover member 7 may be made constant in the longitudinal direction. At this time, the offset amount X1 of the top ridge 21a of the side cover portion 21 of FIG 10B becomes the same as the offset amount X1 of the top ridge 21 a of the side cover portion 21 of FIG 10A. Furthermore, in the case of FIGS. 1A to 5C, the offset amount X1 of the top ridge 20d, 21a of the cover member 7 can be made constant in the longitudinal direction.

In the above embodiment, the cover member 7, which receives the lever assembly 4, also serves as the fin member. However, the fin member does not need to be formed as the cover, which receives the lever assembly 4.

Additional advantages and modifications will readily occur to those skilled in the art. The invention in its broader terms is therefore not limited to the specific details, representative apparatus, and illustrative examples shown and described. The invention may include any combination of the features or limitations of the above embodiments and modifications.

## Claims

1. A wiper blade comprising:
a wiper strip (5) that directly wipes a wiping surface (30a);
a lever assembly (4) that holds the wiper strip (5) and includes a plurality of levers (2, 3), which are connected together in tournament style, wherein an axial length of the lever assembly (4) is shorter than an axial length of the wiper strip (5); and
a fin member (7) that is installed to the lever assembly (4) and has a fin arrangement (20e, 21b, 22b, 23d), wherein the fin arrangement (20e, 21b, 22b, 23d) exerts an urging force for urging the wiper strip (5) against the wiping surface (30a) when the fin arrangement (20e, 21b, 22b, 23d) receives a head wind, wherein:
the fin member (7) has a top ridge (20d, 21a, 22a, 23c), which is offset from a center line (L1) of the wiper strip (5) normal to the wiping surface in a transverse direction of the wiper blade on a first side of said center line (L1) of the wiper strip (5), **characterised in that**
the fin arrangement (20e, 21b, 23d) of the fin member (7) extends in the transverse direction of the wiper blade from the top ridge (20d, 21a, 23c) of the fin member (7) into a second side of the center line (L1) of the wiper strip (5), which is opposite from the first side; and
an amount of offset of the top ridge (20d, 21a, 23 c) of the fin member (7) relative to the center line (L1) of the wiper strip (5) is increased in an axial direction of the wiper blade toward at least one of ends of the fin member (7).

2. The wiper blade according to claim 1, wherein:
one of the ends of the fin member (7) slidably holds the wiper strip (5); and
the other one of the ends of the fin member (7) non-slidably holds the wiper strip (5).

3. The wiper blade according to claim 1, wherein:
the plurality of levers (2, 3) includes:
a primary lever (2) for connecting with a wiper arm (8); and
a plurality of secondary levers (3), which are pivotably joined to the primary lever (2); and
at least one of a plurality of finned portions (20, 21) includes:
at least one limiting part (20j, 21j), which contacts the primary lever (2) in a transverse direction of the wiper blade to set a transverse position of the at least one of the plurality of finned portions (20, 21) with respect to the primary lever (2); and
at least one projection (20g, 21c), each of which projects from a corresponding one of the at least one limiting part (20j, 21j) toward a transverse center of the wiper blade.

4. The wiper blade according to claim 3, wherein a projecting length of each of the at least one projection (20g, 21 c) of each of the at least one of the plurality of finned portions (20,21), which projects from the corresponding one of the at least one limiting part (20j, 21j) of the at least one of the plurality of finned portions (20, 21), is equal to or smaller than a wall thickness of the primary lever (2).

5. The wiper blade according to claim 3 or 4, wherein:
the primary lever (2) includes at least one connecting hole (12a); and
each of the at least one projection (21c) of the at least one of the plurality of finned portions (21, 22) forms a pivotal axis and is received in a corresponding one of the at least one connecting hole (12a) of the primary lever (2), so that the at least one of the plurality of finned portions (21, 22) is pivotable relative to the primary lever (2) about the at least one projection (21c) thereof.

6. The wiper blade according to any one of claims 1 to 5, wherein:
each of the plurality of levers (2, 3) is made of metal; and
each of the plurality of cover portions (20-22, 25, 26) is made of resin.

7. The wiper blade according to claim 1, wherein the fin member (7) receives the lever assembly (4).

8. The wiper blade according to claim 1 or 7, wherein:
a height (h) of the top ridge (20d, 21a, 23c) of the fin member (7), which is measured from a lower edge of the fin arrangement (20e, 21b, 23d), is smaller than a transverse width (W) of the fin arrangement (20e, 21b, 23d), which is measured in the transverse direction of the wiper blade, in the at least one of the ends of the fin member (7); and
the height (h) of the top ridge (20d, 21 a, 23c) of the fin member (7) is greater than the transverse width (W) of the fin arrangement (20e, 21b, 23d) in at least one axial intermediate point of the fin member (7), which is located between an axial center of the fin member (7) and the at least one of the ends of the fin member (7).

9. A vehicle wiper system comprising the wiper blade of any one of claims 1 to 8.

## Patentansprüche

1. Wischerblatt, aufweisend:
eine Wischerleiste (5), die direkt über eine Wischfläche (30a) wischt;
eine Hebelanordnung (4), welche die Wischerleiste (5) hält und eine Mehrzahl von Hebeln (2, 3) aufweist, die hierarchisch miteinander verbunden sind, wobei eine axiale Länge der Hebelanordnung (4) kürzer ist als eine axiale Länge der Wischerleiste (5); und
ein Lamellenelement (7), das an der Hebelanordnung (4) installiert ist und eine Lamellenanordnung (20e, 21b, 22b, 23d) aufweist, wobei die Lamellenanordnung (20e, 21b, 22b, 23d) eine drängende Kraft zum Drängen der Wischerleiste (5) gegen die Wischoberfläche (30a) ausübt, wenn die Lamellenanordnung (20e, 21b, 22b, 23d) einen Gegenwind aufnimmt, wobei:
das Lamellenelement (7) eine obere Rippe (20d, 21a, 22a, 23c) aufweist, die von einer Mittellinie (L1) der Wischerleiste (5) senkrecht zu der Wischoberfläche in eine Querrichtung der Wischerleiste auf eine erste Seite der Mittellinie (L1) der Wischerleiste (5) versetzt ist, **dadurch gekennzeichnet, dass**
die Lamellenanordnung (20e, 21b, 23d) des Lamellenelements (7) sich in der Querrichtung des Wischerblattes von der oberen Rippe (20d, 21 a, 23c) des Lamellenelements (7) in eine zweite Seite der Mittellinie (L1) der Wischerleiste (5), die der ersten Seite gegenüberliegt, erstreckt; und
ein Betrag des Versatzes der oberen Rippe (20d, 21a, 23c) des Lamellenelements (7) relativ zu der Mittellinie (L1) der Wischerleiste (5) in einer axialen Richtung des Wischerblattes in Richtung auf zumindest eines der Enden des Lamellenelementes (7) hin zunimmt.

2. Wischerblatt nach Anspruch 1, wobei:
eines der Enden des Lamellenelements (7) die Wischerleiste (5) gleitend hält; und das andere der Enden des Lamellenelements (7) die Wischerleiste (5) nichtgleitend hält.

3. Wischerblatt nach Anspruch 1, wobei
die Mehrzahl der Hebel (2, 3) beinhaltet:
einen Haupthebel (2) zum Verbinden mit einem Wischerarm (8); und
eine Mehrzahl von Nebenhebeln (3), die mit dem Haupthebel (2) schwenkbar verbunden sind; und
zumindest einer von einer Mehrzahl von mit Lamellen versehenen Bereichen (20, 21) beinhaltet:
zumindest ein Begrenzungsteil (20j, 21j), das den Haupthebel (2) in einer Querrichtung des Wischerblattes berührt, um eine Querposition von dem zumindest einen von der Mehrzahl von mit Lamellen versehenen Bereichen (20, 21) in Bezug auf den Haupthebel (2) einzustellen; und
zumindest einen Vorsprung (20g, 21c), der bzw. der jeweils von einem entsprechenden des zumindest einen Begrenzungsteils (20j, 21j) in Richtung auf einen auf die Querrichtung bezogenen Mittelpunkt des Wischerblattes vorsteht.

4. Wischerblatt nach Anspruch 3, wobei eine vorstehende Länge von jedem des zumindest einen Vorsprungs (20g, 21 c) von jedem des zumindest einen von der Mehrzahl der mit Lamellen versehenen Bereiche (20, 21), der von dem entsprechenden des zumindest eine Begrenzungsteils (20j, 21j) des zumindest einen von der Mehrzahl der mit Lamellen versehenen Bereiche (20, 21) vorsteht, kleiner oder genauso groß wie eine Wanddicke des Haupthebels (2) ist.

5. Wischerblatt nach Anspruch 3 oder 4, wobei:
der Haupthebel (2) zumindest ein Verbindungsloch (12a) beinhaltet; und
der zumindest eine Vorsprung (21c) oder jeder davon, des zumindest einen der Mehrzahl der mit Lamellen versehenen Bereiche (21, 22) eine Schwenkachse bildet und in einem entsprechenden des zumindest einen Verbindungslochs (12a) des Haupthebels (2) aufgenommen ist, so dass der zumindest eine von der Mehrzahl der mit Lamellen versehenen Bereiche (21, 22) relativ zu dem Haupthebel (2) um den zumindest einen Vorsprung (21c) derselben schwenkbar ist.

6. Wischerblatt nach einem der Ansprüche 1 bis 5, wobei
jeder von der Mehrzahl der Hebel (2, 3) aus Metall besteht; und
jeder von der Mehrzahl der Abdeckbereiche (20-22, 25, 26) aus Harz besteht.

7. Wischerblatt nach Anspruch 1, wobei das Lamellenelement (7) die Hebelanordnung (4) aufnimmt.

8. Wischerblatt nach Anspruch 1 oder 7, wobei:
eine Höhe (h) der oberen Rippe (20d, 21 a, 23c) des Lamellenelements (7), die von einer unteren Rippe der Lamellenanordnung (20e, 21b, 23d) gemessen wird, kleiner ist als eine Breite (W) der Lamellenanordnung (20e, 21 b, 23d), die in der Querrichtung des Wischerblattes gemessen wird, in dem zumindest einen der Enden des Lamellenelements (7); und
die Höhe (h) der oberen Rippe (20d, 21a, 23c) des Lamellenelements (7) größer ist als die in Querrichtung gemessene Breite (W) der Lamellenanordnung (20e, 21b, 23d) in zumindest einem axialen Zwischenpunkt des Lamellenelements (7), der sich zwischen einem axialen Mittelpunkt des Lamellenelements (7) und dem zumindest einen der Enden des Lamellenelements (7) befindet.

9. Fahrzeugwischersystem, aufweisend das Wischerblatt nach einem der Ansprüche 1 bis 8.

## Revendications

1. Balai d'essuie-glace comprenant :
une lame d'essuie-glace (5) qui essuie directement une surface à essuyer (30a) ;
un ensemble de leviers (4) qui maintiennent la lame d'essuie-glace (5) et comporte une pluralité de leviers (2, 3), qui sont reliés entre eux les uns contre les autres, où une longueur axiale de l'ensemble de leviers (4) est plus petite qu'une longueur axiale de la lame d'essuie-glace (5) ; et
un élément d'ailette (7) qui est installé dans l'ensemble de leviers (4) et possède un agencement d'ailette (20e, 21b, 22b, 23d), où l'agencement d'ailette (20e, 21b, 22b, 23 d) exerce une force de sollicitation pour appuyer la lame d'essuie-glace (5) contre la surface à essuyer (30a) lorsque l'agencement d'ailette (20e, 21b, 22b, 23d) reçoit un vent de face, où :
l'élément d'ailette (7) possède une arête supérieure (20d, 21a, 22a, 23c), qui est décalée d'une ligne centrale (L1) de la lame d'essuie-glace (5) normale à la surface à essuyer dans une direction transversale du balai d'essuie-glace sur un premier côté de ladite ligne centrale (L1) de la lame d'essuie-glace (5), **caractérisé en ce que**
l'agencement d'ailette (20e, 21b, 23d) de l'élément d'ailette (7) s'étend dans la direction transversale du balai d'essuie-glace à partir de l'arête supérieure (20d, 21a, 23c) de l'élément d'ailette (7) dans un deuxième côté de la ligne centrale (L1) de la lame d'essuie-glace (5), qui est opposée au premier côté ; et
un degré de décalage de l'arête supérieure (20d, 21a, 23c) de l'élément d'ailette (7) par rapport à la ligne centrale (L1) de la lame d'essuie-glace (5) augmente dans une direction axiale du balai d'essuie-glace vers l'au moins une des extrémités de l'élément d'ailette (7).

2. Balai d'essuie-glace selon la revendication 1, dans lequel :
une des extrémités de l'élément d'ailette (7) maintient de manière coulissante la lame d'essuie-glace (5), et l'autre des extrémités de l'élément d'ailette (7) maintient de manière non coulissante la lame d'essuie-glace (5).

3. Balai d'essuie-glace selon la revendication 1, dans lequel :
la pluralité de leviers (2, 3) comporte :
un levier primaire (2) devant se raccorder à un bras d'essuie-glace (8) ; et
une pluralité de leviers secondaires (3), qui sont reliés en pivotement au levier primaire (2) ; et
au moins une partie d'une pluralité de parties à ailettes (20, 21) comporte :
au moins une partie de limitation (20j, 21j), qui se met en contact avec le levier primaire (2) dans une direction transversale du balai d'essuie-glace pour définir une position transversale de l'au moins une de la pluralité de parties à ailettes (20, 21) par rapport au levier primaire (2) ; et
au moins une projection (20g, 21c), chacune se projette à partir d'une partie correspondante de l'au moins une partie de limitation (20j, 21j) vers un centre transversal du balai d'essuie-glace.

4. Balai d'essuie-glace selon la revendication 3, dans lequel une longueur de projection de chacune de l'au moins une projection (20g, 21c) de chacune de l'au moins une de la pluralité de parties à ailettes (20, 21), qui se projette d'une partie de limitation correspondante de l'au moins une partie de limitation (20j, 21j) de l'au moins une partie à ailettes de la pluralité de parties à ailettes (20, 21), est inférieure ou égale à une épaisseur de paroi du levier primaire (2).

5. Balai d'essuie-glace selon la revendication 3 ou 4, dans lequel :
le levier primaire (2) comporte au moins un trou de raccordement (12a) ; et
chacune de l'au moins une projection (21c) de l'au moins une partie à ailettes de la pluralité des parties à ailettes (21, 22) forme un axe de pivotement et est reçue dans un trou de raccordement correspondant de l'au moins un trou de raccordement (12a) du levier primaire (2), de sorte que l'au moins une de la pluralité des parties à ailettes (21, 22) puisse pivoter par rapport au levier primaire (2) autour de l'au moins une de ses projections (21c).

6. Balai d'essuie-glace selon l'une quelconque des revendications 1 à 5, dans lequel :
chacun de la pluralité de leviers (2, 3) est réalisé en métal ; et
chacune de la pluralité de parties de couverture (20-22, 25, 26) est réalisée en une résine.

7. Balai d'essuie-glace selon la revendication 1, dans lequel l'élément d'ailette (7) reçoit l'ensemble de leviers (4).

8. Balai d'essuie-glace selon les revendications 1 ou 7, dans lequel :
une hauteur (h) de l'arête supérieure (20d, 21a, 23c) de l'élément d'ailette (7), qui est mesurée à partir d'un bord inférieur de l'agencement d'ailette (20e, 21b, 23d), est plus petite qu'une largeur transversale (W) de l'agencement d'ailette (20e, 21b, 23d), qui est mesurée dans la direction transversale du balai d'essuie-glace, dans l'au moins une des extrémités de l'élément d'ailette (7) ; et
la hauteur (h) de l'arête supérieure (20d, 21a, 23c) de l'élément d'ailette (7) est supérieure à la largeur transversale (W) de l'agencement d'ailette (20e, 21b, 23d) dans au moins un point intermédiaire axial de l'élément d'ailette (7), qui est situé entre un centre axial de l'élément d'ailette (7) et l'au moins une des extrémités de l'élément d'ailette (7).

9. Système d'essuie-glace de véhicule comprenant le balai d'essuie-glace de l'une quelconque des revendications 1 à 8.
